(19) Europäisches Patentamt
European Patent Office
Office européen des brevets

(11) EP 3 637 354 A1

(12) EUROPÄISCHE PATENTANMELDUNG

(43) Veröffentlichungstag:
15.04.2020 Patentblatt 2020/16

(51) Int Cl.:
G06Q 30/06 (2012.01)   G06F 8/61 (2018.01)
G05B 19/042 (2006.01)   G06F 16/2457 (2019.01)

(21) Anmeldenummer: 18199859.2

(22) Anmeldetag: 11.10.2018

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(71) Anmelder: Siemens Aktiengesellschaft
80333 München (DE)

(72) Erfinder: Schall, Daniel
1220 Wien (AT)

(74) Vertreter: Maier, Daniel Oliver
Siemens AG
Postfach 22 16 34
80506 München (DE)

(54) **VERFAHREN ZUR SUCHE EINES PROGRAMMCODES FÜR EIN ELEKTRONISCHES GERÄT IN EINER DATENBANK**

(57) Verfahren zur Ansteuerung eines elektronischen Geräts mit einem optimalen Programmcode, wobei ein Indikator und ein Such-Attribut erfasst werden, und ein Such-Modell für ein, auf dem Prinzip des maschinellen Lernens basierendes Such-Verfahren erzeugt und trainiert wird, woraus eine Wichtigkeits-Information abgeleitet wird, und eine Suche nach dem optimalen Programmcode mithilfe der Wichtigkeits-Information aus einer Datenbank ausgeführt wird und der optimale Programmcode aus der Menge von Programmcodes ausgewählt und einer Steuervorrichtung bereitgestellt wird, mittels welcher das elektronische Gerät angesteuert wird.

FIG 1

EP 3 637 354 A1

**Beschreibung**

Die Erfindung betrifft ein Verfahren und ein System zur Ansteuerung eines elektronischen Geräts mit einem optimalen Programmcode.

Außerdem betrifft die Erfindung ein Computerprogramm und ein Speichermedium.

Bei der Entwicklung von Anwendungsprogrammen zur Ansteuerung von elektronischen Geräten wird häufig auf bereits bestehende Software-Bibliotheken, beispielsweise mit Geräte-Treibern, Codesequenzen für Datenerfassung, Datenanalyse und Datenauswertung in Matlab® beziehungsweise Simulink® oder statistische Auswertungs-Codesequenzen in der Programmiersprache R zurückgegriffen, um die Entwicklungszeit der Anwendungsprogramme kurz und entsprechend die Entwicklungskosten gering zu halten.

Derartige Bibliotheken können allgemeine Programmcodes enthalten, welche im Rahmen einer gemeinschaftlichen Entwicklung in einem Software-Ökosystem entstanden sind, wie beispielsweise Open-Source-Software oder auch bereits kompilierte Programmcodes, wobei ein Programmcode mehrere Codezeilen umfasst.

Ein Software-Ökosystem beschreibt das Zusammenspiel zwischen Organisationen und Unternehmen auf einem geteilten Markt für Softwareentwicklung und Services. Hierbei stehen die Beteiligten in ihren Netzwerken und den dadurch gebildeten sozialen oder wirtschaftlichen Ökosystemen mit ihrem Interesse an Software im Mittelpunkt. Oft bildet eine gemeinschaftliche, technologische Plattform (z. B. Siemens MindSphere) oder ein gemeinsamer Markt die Basis für geschäftliche Aktivitäten und eine Zusammenarbeit. Das Ökosystem ist durch den Austausch von Informationen, Ressourcen und Artefakten gekennzeichnet. Solche Anwendungsprogramme beziehungsweise Programmcodes bezogen aus einem Software-Ökosystem können in unterschiedlichen Marktplätzen ("Appstores") von unterschiedlichen Herstellern angeboten werden.

Durch Verwendung von bereits bestehenden Treibern aus derartigen Bibliotheken bei der Entwicklung muss eine Programmiererin keine komplizierten und zumeist Hardware-nahen Detail-Kenntnisse über die Ansteuerung des Geräts besitzen. Somit kann eine Anwendungs-Programmierung auch durch weniger spezialisierte Personen erfolgen.

Bei der Anwendung von Open-Source-Software ist es jedoch häufig schwierig, unter den vielen verfügbaren Varianten und Versionen eine, auf die gegenwärtige Anwendung optimal abgestimmte Software zu finden.

Es ist Aufgabe der Erfindung ein elektronisches Gerät mit einem optimalen Programmcode anzusteuern.

Die Aufgabe wird durch ein Verfahren gelöst,

wobei zumindest ein Indikator, welcher zumindest eine Funktion oder zumindest eine Eigenschaft bei der Ausführung des gesuchten optimalen Programmcodes beschreibt, und zumindest ein Such-Attribut, welches zumindest eine Funktion oder zumindest eine Eigenschaft bei der Suche nach dem gesuchten Programmcode beschreibt, erfasst werden,

und ein Such-Modell für ein, auf dem Prinzip des maschinellen Lernens basierendes Such-Verfahren erzeugt und trainiert wird, woraus zumindest eine Wichtigkeits-Information abgeleitet wird,

und eine Suche nach dem optimalen Programmcode mithilfe der zumindest einen Wichtigkeits-Information aus einer Datenbank, in welcher eine Menge von Programmcodes gespeichert ist, ausgeführt wird und der optimale Programmcode aus der Menge von Programmcodes ausgewählt und einer Steuervorrichtung bereitgestellt wird, mittels welcher das elektronische Gerät angesteuert wird.

Mit anderen Worten werden folgende Schritte ausgeführt:

a) Auswählen des optimalen Programmcodes aus einer Datenbank, in welcher eine Menge von Programmcodes gespeichert sind:

a1) Erfassen von zumindest einem Indikator, welcher zumindest eine Funktion oder zumindest eine Eigenschaft bei der Ausführung des gesuchten optimalen Programmcodes beschreibt,
a2) Erfassen von zumindest einem Such-Attribut, welches zumindest eine Funktion oder zumindest eine Eigenschaft bei der Suche nach dem gesuchten Programmcode beschreibt,
a3) Erzeugen und Trainieren eines Such-Modells für ein Such-Verfahren, welches auf dem Prinzip des maschinellen Lernens basiert, unter Verwendung des zumindest einen Indikators und des zumindest einen Attributs, und Ableiten von zumindest einer Wichtigkeits-Information aus dem Such-Modell,
a4) Ausführen einer Suche nach dem optimalen Programmcode mithilfe des Such-Modells und der zumindest einen Wichtigkeits-Information, wodurch der optimale Programmcodes aus der Menge von Programmcodes in der Datenbank ausgewählt wird,

b) Bereitstellen des optimalen Programmcodes aus der Datenbank an die Steuervorrichtung, mittels welcher das elektronische Gerät ansteuerbar ist.

c) Ausführen und Ansteuern des elektronischen Geräts durch den bereitgestellten optimalen Programmcode mittels der Steuervorrichtung. Durch das erfindungsgemäße Verfahren wird erreicht, dass der optimale Programmcode für das elektronische Gerät aus einer Datenbank gefunden wird und der optimale Programmcode an die Steuervorrichtung breitgestellt wird, womit das elektronische Gerät ansteuerbar ist.

Der optimale Programmcode wird aus einer bestehenden Menge von Programmcodes ermittelt. Die Menge von Programmcodes ist in der Datenbank gespeichert und jeweils mit

- zumindest einem Programm-Indikator, welcher zumindest eine Funktion oder zumindest eine Eigenschaft bei der Ausführung des Programmcodes beschreibt,
- zumindest einem Programm-Attribut, welches zumindest eine Funktion oder zumindest eine Eigenschaft des Programmcodes beschreibt,

versehen, aus welcher zumindest eine Programm-Wichtigkeits-Information bestimmt werden kann.

Das erfindungsgemäße Verfahren identifiziert jenen Programmcode aus der Menge von Programmcodes als optimalen Programmcode, bei welchem die größte Übereinstimmung der zumindest einen Wichtigkeits-Information eines Programmcodes aus der Menge von Programmcodes und der zumindest einen Wichtigkeits-Information des Suchkriteriums, welches aus dem zumindest einen Indikator und dem zumindest einen Attribut ermittelt wurde.

Es ist klar, dass das Such-Modell für jenen Programmcode aus der Menge von Programmcodes, neben der zumindest einen Programm-Wichtigkeits-Information, auch den zumindest einem Programm-Indikator und das zumindest eine Programm-Attribut berücksichtigt, bevorzugt durch eine geeignete Klassifizierung und/oder Gruppierung, welche insbesondere in der Datenbank gespeichert ist.

Die Verfahrensschritte a1) und a2) können parallel oder in einer anderen Reihenfolge durchgeführt werden.

Die Datenbank kann beispielsweise eine relationale Datenbank sein, aber auch eine Verknüpfung von Daten aus unterschiedlichen oder verteilten Datenspeichern sein, wie zum Beispiel GitHub, ein Onlinedienst, der Software-Entwicklungsprojekte auf seinen Servern bereitstellt (Filehosting), oder Software-Marktplätze (Appstores) für z.B. industrielle Anwendungen.

Die Steuervorrichtung kann eine Mikrocontroller-Einheit (z.B. eine "embedded platform") sein, oder ein Smartphone oder auch ein virtuelles Gerät in Form einer Cloud-Anwendung.

Maschinelles Lernen ist ein Oberbegriff für die "künstliche" Generierung von Wissen aus Erfahrung: Ein künstliches System lernt aus Beispielen und kann diese nach Beendigung der Lernphase verallgemeinern. Das heißt, es werden nicht einfach die Beispiele auswendig gelernt, sondern es "erkennt" Muster und Gesetzmäßigkeiten in den Lerndaten. So kann das System auch unbekannte Daten beurteilen (Lerntransfer) oder aber am Lernen unbekannter Daten scheitern (Überanpassung).

Maschinelles Lernen ist eng verwandt mit "Knowledge Discovery in Databases" und "Data-Mining", bei dem es jedoch vorwiegend um das Finden von neuen Mustern und Gesetzmäßigkeiten geht. Viele Algorithmen können für beide Zwecke verwendet werden. Außerdem können Methoden der "Knowledge Discovery in Databases" genutzt werden, um Lerndaten für "maschinelles Lernen" zu produzieren oder vorab zu verarbeiten, und Algorithmen aus dem maschinellen Lernen finden beispielsweise beim Data-Mining Anwendung.

Beim maschinellen Lernen spielen Art und Mächtigkeit der Wissensrepräsentation eine wichtige Rolle. Man unterscheidet zwischen symbolischen Systemen, in denen das Wissen - sowohl die Beispiele als auch die induzierten Regeln - explizit repräsentiert ist, und subsymbolischen Systemen wie neuronalen Netzen, denen zwar ein berechenbares Verhalten "antrainiert" wird, die jedoch keinen Einblick in die erlernten Lösungswege erlauben; hier ist Wissen implizit repräsentiert.

Die praktische Umsetzung geschieht mittels Algorithmen, welche sich grob einteilen lassen in:

- Überwachtes Lernen ("supervised learning"): Ein Algorithmus lernt eine Funktion aus gegebenen Paaren von Ein- und Ausgaben und während des Lernens stellt ein "Lehrer" den korrekten Funktionswert zu einer Eingabe bereit. Ziel beim überwachten Lernen ist, dass dem Netz nach mehreren Rechengängen mit unterschiedlichen Ein- und Ausgaben die Fähigkeit antrainiert wird, Assoziationen herzustellen. Ein Teilgebiet des überwachten Lernens ist die automatische Klassifizierung.
- Unüberwachtes Lernen ("unsupervised learning"): Ein Algorithmus erzeugt für eine gegebene Menge von Eingaben ein Modell, das die Eingaben beschreibt und Vorhersagen ermöglicht. Dabei gibt es Clustering-Verfahren, die die Daten in mehrere Kategorien einteilen, die sich durch charakteristische Muster voneinander unterscheiden. Das Netz erstellt somit selbständig Klassifikatoren, nach denen es die Eingabemuster einteilt.

Des Weiteren unterscheidet man zwischen Batch-Lernen, bei dem alle Eingabe/Ausgabe-Paare gleichzeitig vorhanden sind, und kontinuierlichem (sequentiellem) Lernen, bei dem sich die Struktur des Netzes zeitlich versetzt entwickelt.

Außerdem unterscheidet man zwischen Off-line-Lernen, bei dem alle Daten gespeichert sind und somit wiederholbar zugreifbar sind, und On-line-Lernen, bei dem die Daten nach einmaligem Ausführen und Anpassen der Gewichte verloren gehen. Batch Training ist immer off-line, On-line-Training ist immer inkrementell. Inkrementelles Lernen kann jedoch on-line oder off-line erfolgen.

Zu den überwachten Lernverfahren zählen alle Verfahren zur Regression oder Klassifikation, beispielsweise mit Algorithmen wir k-nearest-Neighbour, Random Forest, künstliche neuronale Netze, Support Vector Machines oder auch Verfahren der Dimensionreduktion wie die lineare Diskriminanzanalyse.

In einer Weiterbildung der Erfindung basiert das Such-Modell auf einem Random-Forest-Modell. Verwandte Verfahren wie z.B. Support Vector Machines, künstliche neuronale Netze können analog für die Erstellung des Such-Modells herangezogen werden.

Ein Random Forest ist ein Klassifikations- und Regressionsverfahren, das aus mehreren unkorrelierten Entscheidungsbäumen besteht. Alle Entscheidungsbäume sind unter einer bestimmten Art von Randomisierung während des Lernprozesses gewachsen. Für eine Klassifikation darf jeder Baum in diesem Wald (eng. Forest) eine Entscheidung treffen und die Klasse mit den meisten Stimmen entscheidet die endgültige Klassifikation. Random Forests können auch zur Regression eingesetzt werden.

Ein Random Forest weist gegenüber anderen Klassifikationsmethoden, wie einer Support Vector Machine (SVM), folgende signifikante Vorteile auf:

- Ein Klassifikator kann durch einen jeweils einfach aufgebauten Entscheidungsbaum sehr schnell trainiert werden, wobei die Trainingszeit linear mit der Anzahl der Bäume steigt.
- Eine Evaluierung von Testdaten kann auf getrennten Bäumen jeweils einzeln erfolgen und ist daher parallelisierbar. Er evaluiert also schnell.
- Durch Verwendung mehrerer Entscheidungsbäume (für Klassen, Trainingsbeispiele, Merkmale) sehr effizient für große Datenmengen.
- Wichtige Klassen können einfach erkannt werden und in Form eines oder mehrerer Parameter für die Wichtigkeit einer Klasse bestimmt werden.
- Der Zusammenhang zwischen Klassen kann einfach erkannt werden.

Es gibt viele verschiedene Varianten zum Trainieren und Klassifizieren eines Random Forest, wie zum Beispiel durch die Art der Entscheidungsbäume oder die Festlegung einer maximalen Tiefe der Bäume.

Es kann beispielsweise für jeden Entscheidungsbaum im Wald folgender Algorithmus angewandt werden:

- Von den $n$ Beobachtungen in der Trainingsmenge werden $n$ Stück zufällig mit Zurücklegen gezogen.
- Von den $M$ Merkmalen (Features oder Dimensionen) der Trainingsdaten werden an jedem Knoten im Baum $m<<M$ Merkmale zufällig gewählt, die als Kriterium für den Schnitt (Split) infrage kommen sollen. Die anschließende Auswahl eines Merkmals aus dieser Menge kann zum Beispiel mittels der Minimierung der Entropie geschehen.
- Der Baum wird voll ausgebaut und nicht zurückgeschnitten (Pruning).

Zur Klassifikation einer Eingabe wird diese in jedem Baum ausgewertet. Diejenige Klasse, die am häufigsten gewählt wurde, ist die Ausgabe des Random Forest. Falls es mehrere Klassen gibt, die am häufigsten gewählt wurden, muss man sich für eine Klasse entscheiden.

Es können beispielsweise zusätzlich in jedem Blatt die A-posteriori-Wahrscheinlichkeiten der Klassen, mit denen sie das Blatt finden, gespeichert werden. Diese Wahrscheinlichkeiten werden anschließend bei der Klassifikation berücksichtigt, wodurch die Fehlerrate in ihrer Anwendung verringert werden kann.

Bei Verwendung eines Random Forest ist es günstig, wenn eine "Mean Decrease in Accuracy"-Metrik oder eine "Mean Decrease in Gini"-Metrik zur Bestimmung der zumindest einen Wichtigkeits-Information gewählt wird. Dadurch wird die Wichtigkeits-Information auf eine einfache Weise bestimmt.

Die "Mean Decrease in Accuracy"-Metrik misst die Wichtigkeit von Merkmalen ("feature importance") beziehungsweise von Variablen.

Die "Mean Decrease in Gini"-Metrik misst die Knotenreinheit in Baum-basierten Klassifikationen. Ein niedriger Gini-Wert, das heißt eine höhere Reduktion des Gini-Werts bedeutet, dass eine einzelne Prognose-Variable eine größere Rolle in der Einteilung der Daten in definierte Klassen spielt.

In einer Weiterbildung der Erfindung wird der zumindest eine Indikator fortlaufend, beispielsweise täglich oder wöchentlich, neu bestimmt. Dadurch können aktuelle Änderungen in der Programmcode-Datenbank in der Suche berücksichtigt werden.

In einer Weiterbildung der Erfindung wird nach der Bestimmung des zumindest einen Indikators eine Klassifizierung nach vordefinierten Wertebereichen durchgeführt und deren Ergebnis beim Ausführen der Suche nach dem optimalen Programmcode berücksichtigt. Dadurch wird erreicht, dass auf eine einfache Weise eine Klassifikation durchgeführt und in weiterer Folge das Ergebnis der Suche verbessert wird.

In einer Weiterbildung der Erfindung wird nach der Bestimmung des zumindest einen Indikators eine Gruppierung nach ähnlichen Eigenschaften durchgeführt und deren Ergebnis beim Ausführen der Suche nach dem optimalen Programmcode berücksichtigt wird. Dadurch wird erreicht, dass auf eine einfache Weise eine Gruppierung durchgeführt und in weiterer Folge das Ergebnis der Suche verbessert wird.

In einer Weiterbildung der Erfindung wird nach der Klassifizierung zumindest eine Klassifikations-Information über die Wichtigkeit einer Klasse abgeleitet, welche beim Ausführen der Suche nach dem optimalen Programmcode berücksichtigt wird. Dadurch wird erreicht, dass auf eine einfache Weise eine zusätzliche Klassifikations-Information berücksichtigt und in weiterer Folge das Ergebnis der Suche verbessert wird.

In einer Weiterbildung der Erfindung ist der Programmcode ein Geräte-Treiber.

Die Erfindung bezieht sich auch auf ein System zum Bereitstellen eines optimalen Programmcodes für die Ansteuerung eines elektronischen Geräts, wobei das System eine Suchvorrichtung, eine Steuervorrichtung und eine Datenbank mit Programmcodes umfasst.

Ferner ist das System dazu eingerichtet, das erfindungsgemäße Verfahren durchzuführen, wobei der optimale Programmcode aus den Programmcodes der Datenbank von der Suchvorrichtung ermittelt und an die Steuervorrichtung übertragen wird, wodurch das elektronische Gerät durch die Steuervorrichtung ansteuerbar ist.

Die Erfindung bezieht sich auch auf ein Computerprogramm, welches direkt in einen Speicher der Suchvorrichtung des erfindungsgemäßen Systems ladbar ist, mit Programmcodemitteln, um die Schritte des erfindungsgemäßen Verfahrens auszuführen, wenn das Programm in der Suchvorrichtung ausgeführt wird.

Das erfindungsgemäße Computerprogramm implementiert das erfindungsgemäße Verfahren auf einer erfindungsgemäßen Suchvorrichtung, wenn es auf der Suchvorrichtung ausgeführt wird.

Dementsprechend gehört zur Erfindung außerdem ein Speichermedium mit darauf gespeicherten elektronisch lesbaren Steuerinformationen, welche zumindest ein erfindungsgemäßes Computerprogramm umfassen und derart ausgestaltet sind, dass sie bei Verwendung des Speichermediums in der Suchvorrichtung des erfindungsgemäßen Systems das erfindungsgemäße Verfahren durchführen.

Das Speichermedium kann beispielsweise zum digitalen oder analogen Speichern von Daten eingerichtet sein. Das Speichermedium kann, einfach oder mehrfach beschreibbar, flüchtig (volatil) oder nicht flüchtig sein.

Es ist klar, dass der optimale Programmcode, sobald er der Steuervorrichtung bereitgestellt ist und dort gespeichert ist, unabhängig von den anderen Komponenten des erfindungsgemäßen Systems ausgeführt werden kann. Somit kann nach einer Programmierung des optimalen Programmcodes in die Steuervorrichtung eine Trennung des Systems erfolgen, das heißt ein alleiniger Betrieb der Steuervorrichtung mit dem elektronischen Gerät erfolgen.

Die Erfindung wird nachfolgend anhand eines in den beigeschlossenen Zeichnungen dargestellten Ausführungsbeispiels näher erläutert. In den Zeichnungen zeigt:

Fig. 1       ein Ablaufdiagramm eines Ausführungsbeispiels des erfindungsgemäßen Verfahrens,

Fig. 2       ein Ausführungsbeispiel für einen Programmcode zur Implementierung maschinellen Lernens,

Fig. 3       ein Ausführungsbeispiel für einen Programmcode zum Trainieren eines Modells für maschinelles Lernen,

Fig. 4       eine Darstellung mit einem Ausführungsbeispiel für eine Metrik in einem Such-Verfahren,

Fig. 5       eine Darstellung mit einem Beispiel einer Darstellung der Wichtigkeit durch Attribute und Kategorien,

Fig. 6       ein erstes Beispiel für eine Klassifikations-Information,

Fig. 7       ein zweites Beispiel für eine Klassifikations-Information,

Fig. 8       ein drittes Beispiel für eine Klassifikations-Information,

Fig. 9       ein Beispiel für eine Gruppierung,

Fig. 10      einen vergrößerten Bildausschnitt aus der Fig. 9,

Fig. 11      ein Ausführungsbeispiel für einen Programmcode zum Gruppieren, und

Fig. 12    ein Beispiel für eine Gruppenanalyse für ausgewählte Attribute,

Fig. 13    ein Beispiel für ein erfindungsgemäßes System.

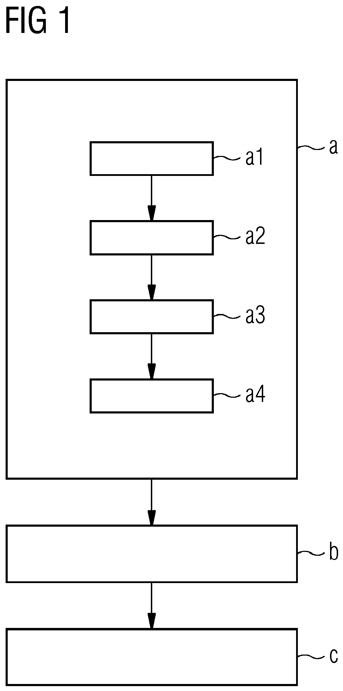

In Fig. 1 ist ein Ausführungsbeispiel mit einem Ablaufdiagramms des erfindungsgemäßen Verfahrens schematisch dargestellt.
Folgende Schritte werden dabei ausgeführt:

a) Auffinden des optimalen Programmcodes 1 aus einer Datenbank 4, in welcher eine Menge von Programmcodes 10 gespeichert sind:

a1) Erfassen von zumindest einem Indikator, welcher zumindest eine Funktion oder zumindest eine Eigenschaft bei der Ausführung des gesuchten optimalen Programmcodes 1 beschreibt,
a2) Erfassen von zumindest einem Such-Attribut, welches zumindest eine Funktion oder zumindest eine Eigenschaft bei der Suche nach dem gesuchten Programmcode 1 beschreibt,
a3) Erzeugen und Trainieren eines Such-Modells für ein Such-Verfahren, welches auf dem Prinzip des maschinellen Lernens basiert, unter Verwendung des zumindest einen Indikators und des zumindest einen Attributs, und Ableiten von zumindest einer Wichtigkeits-Information aus dem Such-Modell,
a4) Ausführen einer Suche nach dem optimalen Programmcode 1 mithilfe der zumindest einen Wichtigkeits-Information, wodurch der optimale Programmcode 1 aus der Menge von Programmcodes 10 in der Datenbank 4 ausgewählt wird,

b) Bereitstellen des optimalen Programmcodes 1 aus der Datenbank 4 an die Steuervorrichtung 3, mittels welcher das elektronische Gerät 2 ansteuerbar ist.

c) Speichern und Ausführen des bereitgestellten optimalen Programmcodes 1 durch die Steuervorrichtung 3, und Ansteuern des elektronischen Geräts 2.

Die Datenbank 4 kann eine Programmcodedatenbank beispielsweise nach Art eines digitalen Softwaremarktplatzes, auch mit dem englischen Fachbegriff Appstore bezeichnet, sein. Das Ausführungsbeispiel zielt insbesondere auf eine Anwendung im Kontext von Open-Source-Software ab. Das erfindungsgemäße Verfahren ist jedoch auch allgemein für Software-Ökosysteme für Programmcodes anwendbar, welche in Marktplätzen von unterschiedlichen Herstellern angeboten werden.
Zunächst wird zumindest ein Indikator erfasst, welcher zumindest eine Funktion oder zumindest eine Eigenschaft bei der Ausführung des gesuchten optimalen Programmcodes 1 beschreibt.
Die Funktion kann eine technische Funktion sein, welche der gesuchte Programmcode 1 abbildet und durch die Ausführung des Programmcodes 1 beispielsweise durch einen Mikroprozessor erreicht wird.
Die Eigenschaft kann eine Kenngröße sein, welche beispielsweise die Anzahl der Käufe oder Abrufe in einem App-Store, die Anzahl der Aufrufe des Programmcodes oder die Anzahl der Einbindungen des Programmcodes in andere Programmsequenzen beschreibt, was allgemein auch als "Verwendungshäufigkeit" bezeichnet werden kann.
Die Funktion oder Eigenschaft bei der Ausführung eines Programmcodes in Form des zumindest einen Indikators kann beispielsweise als Metrik hinsichtlich des Verbreitungsgrads angesehen werden. Der Verbreitungsgrad kann neben der Anzahl an Verkäufen oder Downloads eines Programmcodes am Marktplatz beispielsweise auch die durchschnittliche Nutzungsdauer des Programmcodes oder eine durchschnittliche Bewertung am Marktplatz durch Nutzer.
Die Ausführung eines Programmcodes inkludiert beispielsweise auch Tätigkeiten einer Entwicklerin bei der Einbettung in Anwendungs-Programmcodes während der Entwicklung oder die Fehlersuche und Fehlerbehebung.
Der zumindest eine Indikator kann fortlaufend neu bestimmt werden, um neueste Aktualisierungen von Programmcodes in der Datenbank zu erfassen. Dies kann beispielsweise täglich oder wöchentlich erfolgen.
Anschließend wird zumindest ein Such-Attribut erfasst, welches zumindest eine Funktion oder zumindest eine Eigenschaft bei der Suche nach dem gesuchten Programmcode 1 beschreibt.
Such-Attribute können beispielsweise sein:

Tabelle 1: Beispiele für Attribute

| Attribut | Beschreibung |
|---|---|
| Repository | Die Anzahl an Speicherstellen oder Marktplätzen, an welchen der Programmcode verfügbar ist |

(fortgesetzt)

| Attribut | Beschreibung |
|---|---|
| numAuthors | Die Anzahl an Autoren, die am Programmcode beigetragen haben |
| numVersions | Die Anzahl an Versionen des Programmcodes |
| numCodeVersions | Die Anzahl an Versionen mit Quellcode-Änderungen des Programmcodes |
| avgVersion | Durchschnittliche Zeit zwischen neuen Versionen des Programmcodes |
| avgCodeVersion | Durchschnittliche Zeit zwischen neuen Versionen mit Quellcode-Änderungen des Programmcodes |
| locMax | Aktuelle oder frühere Anzahl an Codezeilen des Programmcodes |
| locGrowth | Änderung der Anzahl an Codezeilen des Programmcodes zwischen der aktuellen und der ursprünglichen Anzahl an Codezeilen |
| numDependencies | Anzahl an Abhängigkeiten von anderen Programmcodes (apps) |
| depthDependency | Die maximale Tiefe der Abhängigkeitskette des Programmcodes, welche von einer Kern-Programmierschnittstelle (core API, core application programming interface) bestimmt wird |
| revDepends | Anzahl an Rückwärts-Abhängigkeiten |
| transitRevDepends | Anzahl an transitiven Rückwärts-Abhängigkeiten |
| depthRevDepends | Die maximale Tiefe der Rückwärts-Abhängigkeitskette des Programmcodes, welche von einem Kern-Plattform-Programmcode (platform app) oder einer Kern-Programmierschnittstelle (core API) bestimmt wird |
| disPeriod | Beschreibt das Verhalten beim Herunterladen des Programmcodes über die Zeit |
| avgDls | Durchschnittliche Anzahl des Herunterladens (downloads) des Programmcodes |
| ageFirst | Das Alter der ersten Version (Release) des Programmcodes |
| publicationYear | Das Jahr der Veröffentlichung am Marktplatz (appstore) |
| Active | Status, wenn der Programmcode aktiv vertrieben oder unterstützt wird |

Für Programmcodes können Attribute beispielsweise gemäß Tabelle 1 definiert sein. Je nach Programmcode können aber durchaus unterschiedliche Attribute Relevanz haben. Für die spätere Verwendung der Attribute ist es günstig, wenn die Attribute verschiedener Programmcodes eine gemeinsame Schnittmenge aufweisen.

Nach der Bestimmung des zumindest einen Indikators und des zumindest einen Attributs erfolgt ein Trainieren eines Such-Modells für ein Such-Verfahren.

Dabei basiert das Such-Verfahren auf dem Prinzip des maschinellen Lernens und der zumindest eine Indikator und das zumindest eine Attribut findet dabei Anwendung.

Das Such-Verfahren kann nach dem Stand der Technik durch bekannte Techniken zum maschinellen Lernen (ML) für Klassifizierung und Regression erfolgen, wie beispielsweise Random Forests (RF), Support Vector Machines (SVM), neuronale Netzwerke (Neural Networks, NN)oder tiefe neuronale Netzwerke (Deep Neural Networks, DNN).

Wie vorher erwähnt, kann die Verwendungshäufigkeit eines Programmcodes beispielsweise durch die durchschnittliche tägliche Anzahl an Downloads definiert sein, wobei eine hohe Anzahl als besser angesehen wird.

Dabei können die Downloads an ein Benutzer-Endgerät oder etwa an ein Edge-Gerät erfolgen. Ein Edge-Gerät ist ein Gerät, das einen Einstiegspunkt in Kernnetzwerke von Unternehmen oder Serviceanbietern bereitstellt. Beispiele dazu sind Router, Routing-Switches, integrierte Zugangsgeräte, Multiplexer und eine Vielzahl von Metropolitan Area Network- und Wide Area Network Access Devices.

Die Anzahl an Downloads kann eine diskrete Variable mit einem zählbaren numerischen Wert sein. Im Gegensatz dazu enthält eine kategorische Variable eine endliche Anzahl an Kategorien oder eindeutigen Gruppen.

Vorzugsweise werden zum Trainieren des Such-Modells Techniken zum überwachten Lernen (supervised learning) angewandt, welches dazu fähig ist, eine kategorische Variable *y* in der Form

$$y = predict(A, M)$$

vorauszuberechnen, wobei

**A**   die Menge der messbaren Attribute des Programmcodes, und

**M**   das trainierte ML-Modell ist.

Durch Segmentierung eines Bereichs, beispielsweise mittels einer Zuordnung der durchschnittlichen Anzahl an Downloads in eine definierte Menge mit Bereichsgrenzen, also vordefinierte Wertebereiche, können kategorische Variablen definiert werden:

$$\{VLOW, LOW, MID, HIGH, VHIGH\}$$

wobei **VLOW** für sehr wenige Downloads und **VHIGH** für sehr viele Downloads steht.

Tabelle 2: Beispiele für Kategorisierungen

| Regel | Kategorie |
|---|---|
| avgDls < 0.5 | VLOW, very low |
| $0.5 \leq$ avgDls < 5 | LOW |
| $5 \leq$ avgDls < 20 | MID |
| $20 \leq$ avgDls < 200 | HIGH |
| avgDls $\geq$ 200 | VHIGH, very high |

Es ist günstig ML Techniken wie Random Forest (RF) zu verwenden, da RF in der Lage ist, Informationen hinsichtlich einer Wichtigkeit von Merkmalen ("feature importance") zu berechnen.

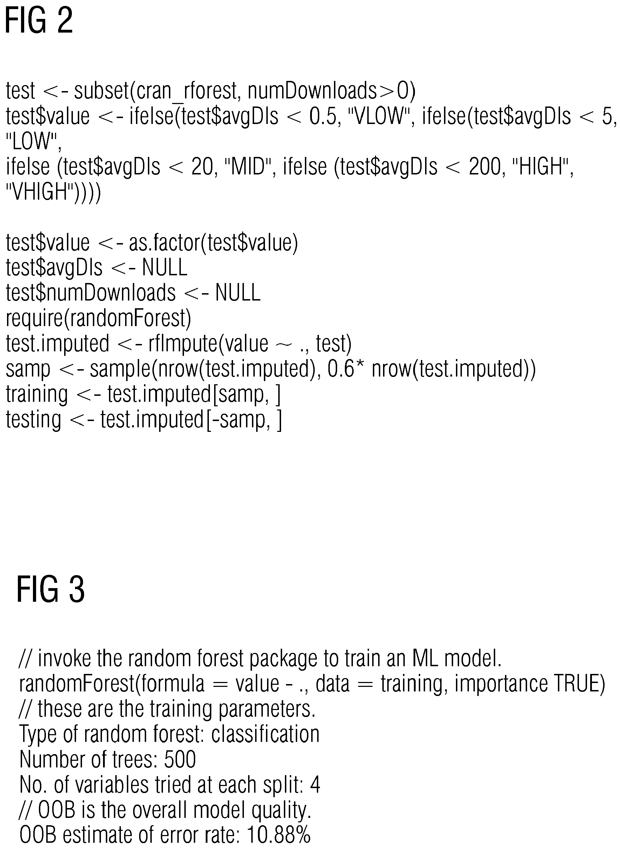

Fig. 2 zeigt ein Ausführungsbeispiel für einen Pseudo-Programmcode zur Implementierung maschinellen Lernens, in welchem Regeln zur Kategorisierung gemäß Tabelle 2 ausgeführt sind.

In Tabelle 3 ist beispielhaft gezeigt, wie die Kategorien prognostiziert werden können. Dabei ist erkennbar, dass einzelne Kategorien besser als andere prognostiziert werden können. Die Anzahl Apps bezeichnet die Anzahl an Programmcodes.

Tabelle 3: Beispiele für eine Fehler-Bestimmung bei der Klassifizierung

| Beobachtung | HIGH | LOW | MID | VHIGH | VLOW | class.error | Anzahl Apps |
|---|---|---|---|---|---|---|---|
| **MID** | 91 | 128 | 4505 | 2 | 3 | 0.0474 | 4729 |
| **LOW** | 1 | 947 | 167 | 0 | 22 | 0.1671 | 1137 |
| **VHIGH** | 34 | 0 | 9 | 86 | 0 | 0.3333 | 129 |
| **VLOW** | 0 | 67 | 5 | 0 | 84 | 0.4615 | 156 |
| **HIGH** | 280 | 5 | 225 | 18 | 0 | 0.4697 | 528 |

Fig. 3 zeigt ein Ausführungsbeispiel für einen Pseudo-Programmcode zum Trainieren eines Modells für maschinelles Lernen, wobei OOB eine "out-of-bag"-Fehler-Bestimmung ist, welche einen Qualitäts-Hinweis darauf gibt, wie gut eine gegebene Kategorie oder Klasse prognostiziert werden kann.

In einem weiteren Schritt kann nun durch das Trainieren des Such-Modells, beispielsweise ein RF Modell, zumindest eine Information abgeleitet werden, welche die Wichtigkeit von Merkmalen ("feature importance") definiert.

In der Datenbank 4 sind zumindest zwei Codesequenzen 10 gespeichert, aus welchen eine Codesequenz der zumindest zwei Codesequenzen 10 als der optimale Programmcode 1 ermittelt wird.

Das Such-Verfahren kann auf dem Random-Forest-Verfahren mit folgenden Metriken zur Berechnung der Wichtigkeit von Merkmalen ("feature importance") beruhen:

- "Mean Decrease in Accuracy" (MDA): misst die Wichtigkeit von Merkmalen (feature importance) beziehungsweise von Variablen.

- "Mean Decrease in Gini" (MDG): misst die Knotenreinheit in Baum-basierten Klassifikationen. Ein niedriger Gini-Wert, das heißt eine höhere Reduktion des Gini-Werts bedeutet, dass eine einzelne Prognose-Variable eine größere Rolle in der Einteilung der Daten in definierte Klassen spielt.

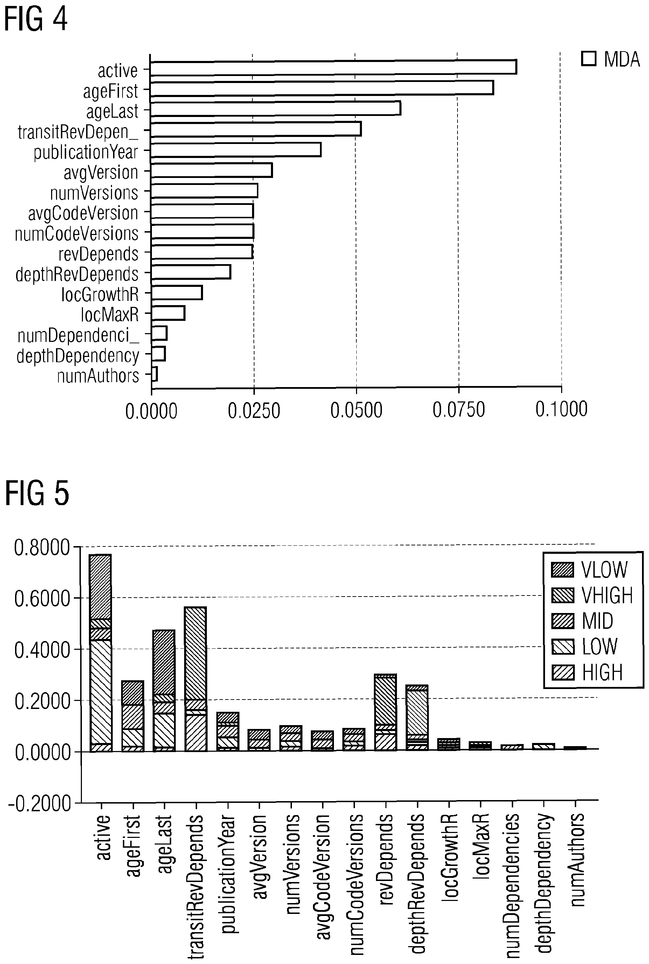

Fig. 4 zeigt ein Ausführungsbeispiel für eine MDA-Metrik im RF-Such-Verfahren. Die MDA-Metrik gibt eine direkte Indikation, welche Attribute wichtig sind.

In der Figur sind verschiedene Attribute mit den zugehörigen, errechneten MDA-Werten dargestellt, wobei erkennbar ist, dass die wichtigsten Attribute jeweils größere MDA-Werte aufweisen.

Für die weitere Berechnung kann einerseits der absolute MDA-Wert verwendet werden. Zum anderen kann aber auch eine größere Änderung in den MDA-Werten untereinander beachtet werden, also ein größerer Sprung in zwei MDA-Werten zweier Attribute. Diese Aspekte können dazu verwendet werden, wie viele Attribute ausgewählt werden, um genauer zu Suchen.

Gemäß dem Beispiel aus der Fig. 4 sind die Attribute mit den höchsten MDA-Werten:

- active: Status, ob der Programmcode aktiv unterstützt wird. Ein Programmcode kann noch verfügbar sein, wird aber möglicherweise nicht mehr aktiv unterstützt beziehungsweise gewartet.
- ageFirst: Das Alter der ersten Version (Release) des Programmcodes. Eine längere Verfügbarkeit des Programmcodes erhöht möglicherweise die Popularität, da die aktuelle Version für Benutzer ausgereifter erscheint.
- ageLast: Das Alter oder die Aktualität der letzten Version (Release) des Programmcodes. Eine Kombination mit ageFirst kann bedeuten, dass der Programmcode über einen langen Zeitraum aktualisiert wurde und bereits viele Fehler identifiziert und behoben wurden.
- transitRevDepends: Anzahl an transitiven Rückwärts-Abhängigkeiten, was zu einer hohen Popularität führen kann, da eine große Anzahl an Rückwärts-Abhängigkeiten auf eine breite Nutzung durch andere Programmcodes hindeuten kann.
- publicationYear: Das Jahr der Veröffentlichung am Marktplatz (appstore). Ältere Programmcodes können mit der Zeit im Marktplatz dominieren und somit eine große Rolle in einem Software-Ökosystem spielen. Dies kann ein Indiz dafür sein, dass ein Programmcode für eine ähnliche Anwendung rasch publiziert werden sollte.

Fig. 5 stellt ein Beispiel für die Informationen über die Wichtigkeit durch Attribute und Kategorien dar. Die Wichtigkeit der Attribute ist in verschiedenen Kategorien {*VLOW, LOW, MID, HIGH, VHIGH*} dargestellt. Das Attribut "active" hat einen großen Einfluss den Programmcode als "VLOW" oder "LOW" zu klassifizieren. Dies erscheint offensichtlich, da nicht-aktive Programmcodes weniger häufig heruntergeladen werden, als aktive Programmcodes. Andererseits hat das Attribut "transitRevDepends" einen großen Einfluss darauf, dass der Programmcode als "populär" klassifiziert wird. Es kann vorteilhaft sein, wenn die Lage des Programmcode innerhalb eines Abhängigkeitsnetzwerks ist. Es kann beispielsweise günstig sein, wenn der Programmcode "nahe" an der Kern-Programmierschnittstelle (core API) liegt.

In Fig. 5 ist auch erkennbar, dass das Wachstum des Programmcodes (growth of code), in diesem Beispiel das Attribut locMaxR, welches die aktuelle oder frühere Anzahl R an Codezeilen des Programmcodes angibt und einen Indikator für die Reichhaltigkeit an Funktionen des Programmcodes darstellt, kein wichtiger Treiber für die Popularität des Programmcodes ist. Dieser Aspekt kann in anderen Anwendungen und Programmcodes jedoch auch anders sein.

Mit anderen Worten kann nach der Bestimmung des zumindest einen Indikators eine Klassifizierung nach vordefinierten Wertebereichen durchgeführt werden. Das Ergebnis der Klassifizierung wird beim Ausführen der Suche nach dem optimalen Programmcode 1 berücksichtigt.

Zusätzlich kann nach der Klassifizierung zumindest eine Klassifikations-Information über die Wichtigkeit einer Klasse abgeleitet werden, um das Such-Modell weiter zu verbessern.

Mit anderen Worten kann nach der Klassifizierung zumindest eine Klassifikations-Information über die Wichtigkeit einer Klasse abgeleitet werden. Die zumindest eine Klassifikations-Information wird beim Ausführen der Suche nach dem optimalen Programmcode 1 berücksichtigt.

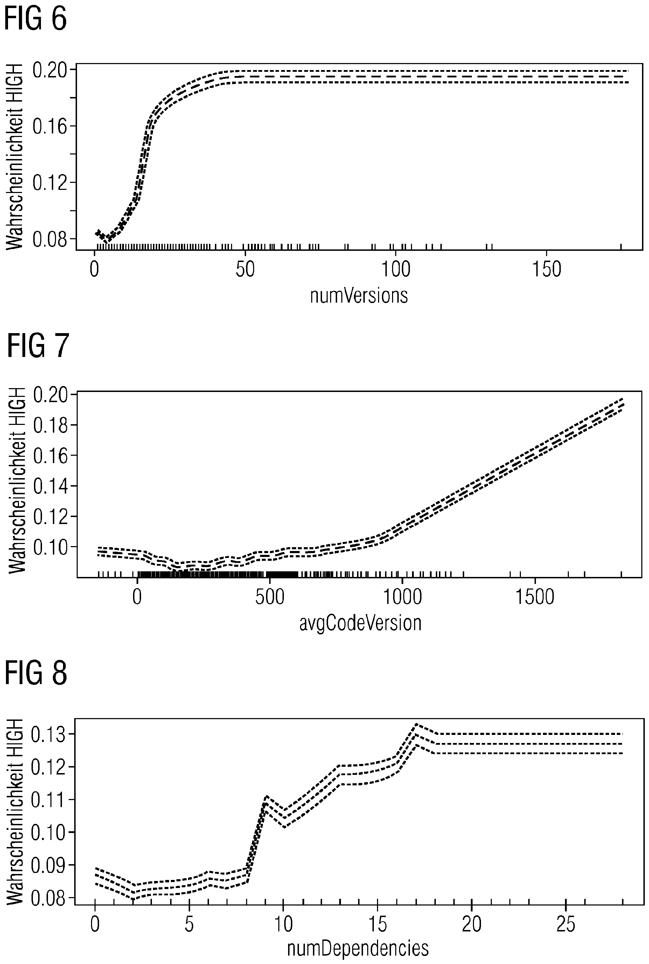

Fig. 6 zeigt ein erstes Beispiel für eine Klassifikations-Information, welche den Zusammenhang zwischen der Anzahl an Versionen und der Wahrscheinlichkeit HIGH.

Fig. 7 zeigt ein zweites Beispiel für eine Klassifikations-Information, welche den Zusammenhang zwischen der durchschnittlichen Zeit zwischen neuen Versionen des Programmcodes und der Wahrscheinlichkeit HIGH.

Fig. 8 zeigt ein drittes Beispiel für eine Klassifikations-Information, welche den Zusammenhang zwischen der Anzahl an Abhängigkeiten und der Wahrscheinlichkeit HIGH.

In den Fig. 6 bis 8 ist erkennbar, wie Kategorien auf Arttribute reagieren. Somit kann festgestellt werden, wie nichtfunktionale Anforderungen wie "Performance" oder "Skalierbarkeit" zum Programmcode beitragen.

Nach der Klassifizierung kann zusätzlich eine Gruppierung nach ähnlichen Eigenschaften durchgeführt werden.

Klassifizierung nennt man allgemein das Zusammenfassen von Objekten zu Klassen (Mengen).

Eine Klassifizierung erfordert entweder die Abstraktion oder aber die Bildung einer mehrschichtigen Struktur in Form eines Komplexes. Es kann zwischen einer "klassenbildenden" und einer "komplexbildende Superierung" unterschieden werden.

Klassifizierung steht für die bewusst geplante Ordnung von Wissen im Rahmen einer konkreten Betrachtung nach objektivierbaren, einheitlichen Kriterien. Da erst die Klassifizierung realer Informationen eine geordnete Verarbeitung ermöglicht, ist die Klassifizierung ebenso zentraler Bestandteil vieler Anwendungen der Informatik, wie beispielsweise in der Mustererkennung.

Bei einer Klassifizierung kann es durch Fehler in der Vorgehensweise und/oder Eigenheiten der einzuordnenden Objekte zu Fehlentscheidungen, sogenannte Fehl- oder Falschklassifikationen, kommen. Es ist günstig zu einer Entscheidung eine Angabe über ihre Zuverlässigkeit beizufügen.

Als Cluster hingegen bezeichnet man in der Informatik und Statistik eine Gruppe von Datenobjekten mit ähnlichen Eigenschaften. Die Menge der in einem Datensatz gefundenen Cluster bezeichnet man als Gruppierung oder Clustering, Verfahren zur Berechnung einer solchen Gruppierung als Clusteranalyse. Nicht zu einem Cluster gehörende Datenobjekte bezeichnet man als Ausreißer, Outlier oder Noise.

Die Kernidee einer Gruppe oder eines Clusters ist, dass Objekte im selben Cluster über "ähnliche" Eigenschaften verfügen und sich von Objekten, die nicht im selben Cluster sind, dadurch unterscheiden.

Bereits bei der Clusterzugehörigkeit gibt es unterschiedliche Formulierungen.

- Bei einem harten Clustering gehört jedes Datenobjekt ganz oder gar nicht zu einem Cluster.
- Bei einem weichen Clustering gehört jedes Datenobjekt zu einem gewissen Anteil zu einem Cluster.

Des Weiteren kann man unterscheiden:

- Bei einem strikt partitionierenden Clustering gehört jedes Datenobjekt zu genau einem Cluster.
- Bei einem strikt partitionierenden Clustering mit Ausreißern kann ein Datenobjekt auch zu keinem Cluster gehören (bei einem weichen Clustering dürfen sich die Anteile auch zu weniger als Eins summieren).
- Bei einem überlappenden Clustering kann ein Objekt echt zu mehreren Clustern gehören (bei einem weichen Clustering dürfen sich die Anteile auch zu mehr als Eins summieren) .

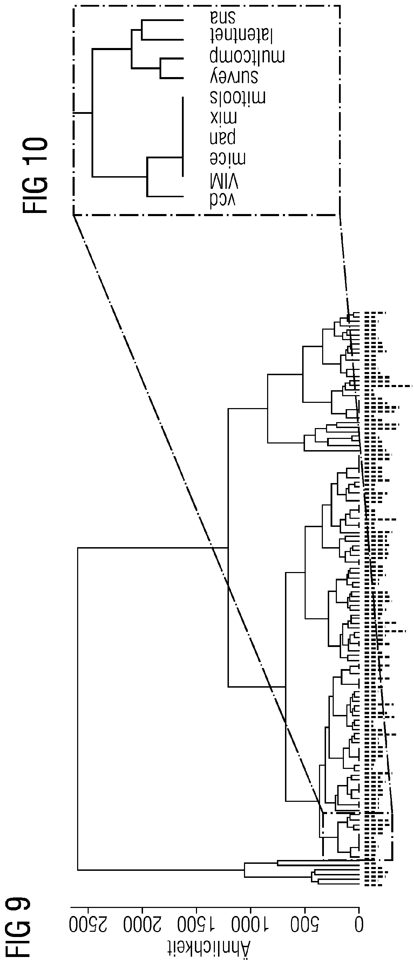

Auch innerhalb von Clustern bzw. Gruppen kann es Untergruppen geben, die einander ähnlicher sind als dem Rest der größeren Gruppe. Hat man eine derartige Struktur, so spricht man von hierarchischen Clustern bzw. einem hierarchischen Clustering. Verfahren zur Identifikation hierarchischer Cluster sind beispielsweise hierarchische Clusteranalyse, OPTICS und BIRCH. Ein Beispiel für eine Gruppierung ist in Fig. 9 und 10 gezeigt. Die Gruppierung oder Clusterung erfolgt basierend auf der Funktionalität eines Programmcodes.

Mit anderen Worten kann nach der Bestimmung des zumindest einen Indikators eine Gruppierung nach ähnlichen Eigenschaften durchgeführt werden. Das Ergebnis der Gruppierung wird beim Ausführen der Suche nach dem optimalen Programmcode 1 berücksichtigt.

Einer der ersten analytischen Marktplätze war CRAN ("Comprehensive R Archive Network"), ein verteiltes Archiv von Modulen für die Programmiersprache R.

Fig. 9 zeigt ein Dendrogramm mit einer Teilmenge des CRAN-Markplatzes mit einer minimalen Schnittmenge von drei Funktionen an Programmcodes, welche ein hierarchisches Cluster-Modell mit funktionellen Gruppen ist. Fig. 10 zeigt eine vergrößerte Darstellung eines Bildausschnitts von Fig. 9.

Auf der Ordinate des Dendrogramms der Fig. 9 ist die Distanz beziehungsweise die Ähnlichkeit aufgetragen. Je nach Auslegung der verwendeten Begriffe der Cluster kann jedoch auch die Unähnlichkeit gemeint sein.

Zur Ermittlung der relevantesten Attribute zur Beschreibung des optimalen Programmcodes 1 können diese weiter durch Gruppierung analysiert werden.

Gruppierung kann dabei unterstützen, ähnliche Programmcodes zu untersuchen und mittels einer vergleichenden Analyse (benchmarking) von Ergebnissen oder Prozessen mit einem festgelegten Bezugswert oder Bezugsprozess zu bewerten.

Diese vergleichende Analyse kann durch einen Arrangeur ("SECO keystone") durchgeführt werden, welcher das Verhalten eines Marktplatzes verstehen will, beispielsweise wie oft ein Programmcode neu herausgegeben wurde, oder wie sich einzelne Programmcodes hinsichtlich des Verhaltens der Funktionalität ähneln, um eine gewünschte Orchestrierung mehrerer Programmcodes oder Module durchzuführen.

Außerdem kann Gruppierung einen weiteren Vorteil bieten, indem keine Kategorie bestimmt werden muss, falls ein Programmcode mehrere Funktionen abbildet, wie beispielsweise Visualisierung und Konfiguration von elektronischen Geräten, und deshalb keine eindeutige Zuordnung möglich ist.

Die in Fig. 9 unten gelegene Reihe mit Knoten repräsentiert den aktuellen Programmcode. Die übrigen Knoten stellen die Gruppen dar, die sich auf den Programmcode beziehen. Gruppenknoten stellen eine Menge gemeinsamer Funktionen des Programmcodes dar. Der an oberster Stelle erkennbare Knoten stellt den Marktplatz dar.

Der Abstand zwischen zusammengeführten Gruppen erhöht sich mit der Höhe bzw. dem Grad der Zusammenführung. Die Höhe jedes Knotens ist zum Wert einer Unähnlichkeit zwischen zwei Gruppen proportional.

Es ist auch ein Vorteil dieses Verfahrens, dass Gruppen basierend auf extrahierten Merkmalen des Programmcodes herausgebildet werden können, wobei die Merkmale bekannten Kategorien des Marktplatzes gegenüberstehen können. Programmcodes innerhalb einer funktionellen Gruppe können ausgewählt und genauer analysiert werden.

Wie im Beispiel angeführt kann das Attribut "revDepends" einen großen Einfluss bei der Klassifizierung von "VHIGH" Programmcodes haben. Nun kann die Herausgabestrategie hinsichtlich der Anzahl an Versionen (numVers) in unterschiedlichen Gruppen analysiert werden. Dies kann unabhängig von einem funktionalen Gruppen-Modell (Fig. 9), erfolgen.

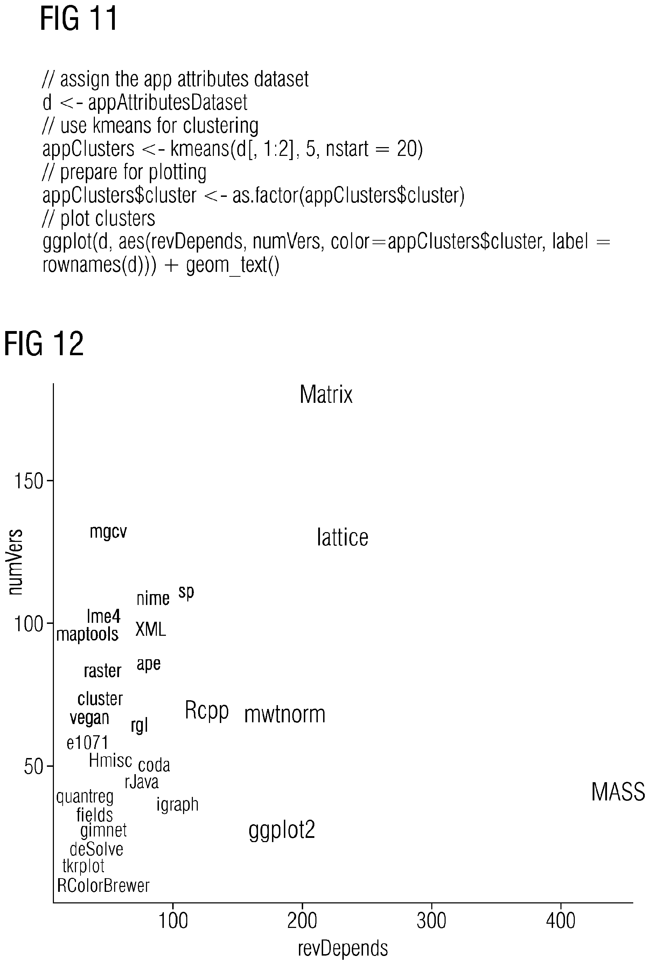

Fig. 11 zeigt ein Ausführungsbeispiel für einen Pseudo-Programmcode zum Gruppieren.

Fig. 12 stellt ein Beispiel für eine Gruppenanalyse für ausgewählte Attribute dar, wobei:

- MASS eine einzelne Gruppe mit einer hohen Anzahl von Rückwärtsabhängigkeiten (revDepends) und einer niedrigen Anzahl an produzierten Versionen (numVersions) ist,
- Matrix-Lattice in einer Gruppe mit einer hohen Anzahl von Rückwärtsabhängigkeiten (revDepends) und einer hohen Anzahl an produzierten Versionen (numVersions) sind, und
- Rcpp, mvtnorm, ggplot2 in einer Gruppe mit einer mittleren Anzahl von Rückwärtsabhängigkeiten (revDepends) und einer niedrigen Anzahl an produzierten Versionen (numVersions) sind.

Dieser Ansatz erlaubt es dem Arrangeur ("SECO keystone") die aktuelle Dynamik in einer funktionellen Gruppe zu untersuchen. Mit anderen Worten kann die Richtung identifiziert werden, in welche beispielsweise die Mehrzahl an Programmcodes hin entwickelt werden.

Entwickler können ferner ihre Programmcodes mit anderen Programmcodes von Mitbewerbern vergleichen.

Außerdem können verschiedene Arrangeure ("SECO keystone") und ihre jeweiligen Marktplätze verglichen werden.

Der optimale Programmcode 1 wird aus einer, in der Datenbank 4 gespeicherten Menge von Programmcodes 10 ermittelt. Das erfindungsgemäße Verfahren findet jeden Programmcode als optimalen Programmcode 1, bei welchem die größte Übereinstimmung an Wichtigkeits-Information, beziehungsweise Klassen und/oder Gruppen der Programmcodes zu Suchkriterien in Form von Indikatoren und Attributen vorliegt.

Liegt zu einer Suche nur ein relevanter Programmcode vor, so ist dieser der optimale Programmcode 1.

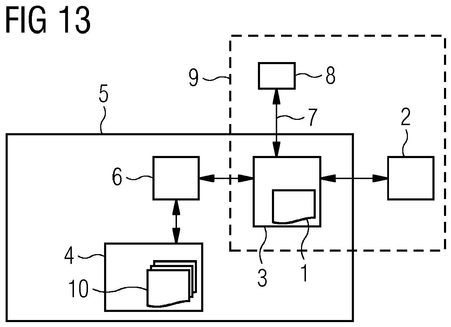

Fig. 13 zeigt ein Beispiel für ein erfindungsgemäßes System 5 zum Ansteuern eines elektronischen Geräts 2 durch ein Steuervorrichtung 3 mit einem optimalen Programmcode 1.

Die Steuervorrichtung 3 führt den bereitgestellten optimalen Programmcode 1, beispielsweise ein Geräte-Treiber, aus. Die Steuervorrichtung 3 kann während der Ausführung weiterhin von einem Benutzer 8 Steuerbefehle oder Steuerdaten 7 zur Ansteuerung des elektronischen Geräts 2 mit Hilfe des Geräte-Treibers empfangen. Dabei können das elektronische Gerät 2 und die Steuervorrichtung 3 eine gemeinsame Funktionseinheit bilden und dabei verschiedene Steuerfunktionen ausführen. Die Steuerfunktionen des elektronischen Geräts 2 beziehungsweise der Steuervorrichtung 3 können sowohl zum Steuern, wie durch das Ansteuern eines Aktors, als auch zum Erfassen von Messgrößen vorgesehen sein und mit weiteren Geräten verbunden sein.

Geräte, insbesondere industriell genutzte Produktionsvorrichtungen im weitesten Sinne, und/oder deren Funktionseinheiten können auch miteinander vernetzt werden. Beispiele für Geräte sind einzelne Produktionsanlagen, Produktionsmaschinen, Sensoren und Aktoren beziehungsweise Motoren. Bei den genannten Beispielen ergibt sich die Systematik, dass eine Produktionsmaschine jeweils zumindest einen Sensor und/oder zumindest einen Aktor beziehungsweise Motor aufweisen kann. Eine Produktionsanlage wiederum kann eine oder mehrere Produktionsmaschinen aufweisen. Es können beispielsweise Geräte unterschiedlicher Hierarchieebenen miteinander vernetzt werden. Wie im Beispiel genannt können dabei auch kleinste Einheiten der Produktionsanlagen, beispielsweise die Sensoren oder Aktoren beziehungsweise Motoren, als eigenständiger Teil mit dem Netzwerk verbunden werden. Dieses Prinzip wird auch als "Internet of Things", zu Deutsch "Internet der Dinge", bezeichnet. Im industriellen Maßstab wird dies auch als Industrie 4.0 bezeichnet, welche durch die feingliedrige und eigenständige Vernetzung der einzelnen Gerätschaften ein besonders hohes Maß an Produktivität und Flexibilität ermöglicht.

Zur Steuerung und/oder Wartung derartiger Geräte, können wiederum unterschiedliche Funktionseinheiten vorgesehen sein. Dabei können Steuerfunktionen durch mehrere gleichartige und/oder verschiedenartige Funktionseinheiten im Zusammenspiel erbracht werden. Der Begriff Steuerfunktionen ist im vorliegenden Kontext breit zu verstehen und beinhaltet alle denkbaren Funktionen zum Steuern, Überwachen, Warten und/oder zum Sammeln von Daten. Mit anderen Worten kann durch ein Zusammenspiel der Funktionseinheiten die Steuerung, Überwachung, Wartung und/oder das Sammeln von Daten der Gerätschaften bereitgestellt sein. Selbstverständlich sind die Funktionseinheiten hierzu ebenfalls mit der Gerätschaft und untereinander vernetzt. Die Funktionseinheiten können über Schnittstellen miteinander kommunizieren, um die Steuerfunktion bereitzustellen. Die Kommunikation über die Schnittstellen erfolgt durch den Austausch von Steuersignalen.

Das System 5 umfasst eine Suchvorrichtung 6 zum Auffinden des optimalen Programmcodes 1 aus einer Datenbank 4 des Systems 5, und eine Steuervorrichtung 3 zum Laden des gefundenen optimalen Programmcodes 1 aus der Datenbank 4 und zum Ausführen des optimalen Programmcodes 1.

Die Steuervorrichtung 3 ist ferner dazu eingerichtet, das erfindungsgemäße Verfahren auszuführen, vorzugsweise mittels Steuerdaten 7, welche beispielsweise von einem Benutzer 8 oder auch einem Anwendungs-Programmcode bereitgestellt werden, und wodurch das elektronische Gerät 2 angesteuert wird. Die Steuerdaten 7 können auch Parameter des elektronischen Geräts 2 an den Benutzer 8 oder den Anwendungs-Programmcode übermittelt werden.

Sobald der optimale Programmcode der Steuervorrichtung 3 bereitgestellt ist und dort gespeichert ist, kann eine Trennung des Systems 5 erfolgen, das heißt ein alleiniger Betrieb der Steuervorrichtung 3 mit dem elektronischen Gerät 2 innerhalb eines neu gebildeten Anwendungssystems 9 erfolgen.

Das Anwendungssystem 9 umfasst somit die Steuervorrichtung 3 und das elektronische Gerät 2, sowie einen Anwendungscode, in welchen der zuvor ermittelte optimale Programmcode eingebettet sein kann. Es kann weiterhin eine Interaktion des optimalen Programmcodes mit dem Benutzer 8 beispielsweise in Form des Anwendungs-Programmcodes durch Steuerdaten 7 erfolgen.

Alternativ kann der bereitgestellte optimale Programmcode in einen Anwendungs-Programmcode eingebettet werden und nicht auf der vorher beschriebenen Steuervorrichtung 3 ausgeführt werden. Diese Variante ist in den Figuren nicht dargestellt. Eine entsprechende Anwendungs-Steuervorrichtung kann konfiguriert werden, um den Anwendungs-Programmcode mit dem eingebetteten optimalen Programmcode auszuführen. Ist dabei der optimale Programmcode ein Geräte-Treiber, so sollte die Anwendungs-Steuervorrichtung einen entsprechenden internen Aufbau der Treiber-Elektronik aufweisen, um den Geräte-Treiber-Programmcode anwenden zu können.

**Bezugszeichenliste:**

1 optimaler Programmcode
2 elektronisches Gerät
3 Steuervorrichtung
4 Datenbank
5 System
6 Suchvorrichtung
7 Steuerdaten
8 Benutzer
9 Anwendungssystem
10 Menge von Programmcodes

**Patentansprüche**

1. Verfahren zur Ansteuerung eines elektronischen Geräts (2) mit einem optimalen Programmcode (1),
wobei zumindest ein Indikator, welcher zumindest eine Funktion oder zumindest eine Eigenschaft bei der Ausführung des gesuchten optimalen Programmcodes (1) beschreibt, und zumindest ein Such-Attribut, welches zumindest eine Funktion oder zumindest eine Eigenschaft bei der Suche nach dem gesuchten Programmcode (1) beschreibt, erfasst werden,
und ein Such-Modell für ein, auf dem Prinzip des maschinellen Lernens basierendes Such-Verfahren erzeugt und trainiert wird, woraus zumindest eine Wichtigkeits-Information abgeleitet wird,
und eine Suche nach dem optimalen Programmcode (1) mithilfe der zumindest einen Wichtigkeits-Information aus einer Datenbank (4), in welcher eine Menge von Programmcodes (10) gespeichert ist, ausgeführt wird und der optimale Programmcode (1) aus der Menge von Programmcodes (10) ausgewählt und einer Steuervorrichtung (3) bereitgestellt wird, mittels welcher das elektronische Gerät (2) angesteuert wird.

2. Verfahren nach dem vorhergehenden Anspruch, wobei das Such-Modell auf einem Random-Forest-Modell basiert, und vorzugsweise eine "Mean Decrease in Accuracy"-Metrik oder eine "Mean Decrease in Gini"-Metrik zur Bestimmung der zumindest einen Wichtigkeits-Information gewählt wird.

3. Verfahren nach einem der vorhergehenden Ansprüche, wobei der zumindest eine Indikator fortlaufend neu bestimmt wird.

4. Verfahren nach einem der vorhergehenden Ansprüche, wobei nach der Bestimmung des zumindest einen Indikators eine Klassifizierung nach vordefinierten Wertebereichen durchgeführt wird und deren Ergebnis beim Ausführen der Suche nach dem optimalen Programmcode (1) berücksichtigt wird.

5. Verfahren nach dem vorhergehenden Anspruch, wobei nach der Bestimmung des zumindest einen Indikators eine Gruppierung nach ähnlichen Eigenschaften durchgeführt wird, und deren Ergebnis beim Ausführen der Suche nach dem optimalen Programmcode (1) berücksichtigt wird.

6. Verfahren nach einem der vorhergehenden Ansprüche, wobei nach der Klassifizierung zumindest eine Klassifikations-Information über die Wichtigkeit einer Klasse abgeleitet wird, welche beim Ausführen der Suche nach dem optimalen Programmcode (1) berücksichtigt wird.

7. Verfahren nach einem der vorhergehenden Ansprüche, wobei der optimale Programmcode (1) ein Geräte-Treiber ist.

8. System (5) zum Bereitstellen des optimalen Programmcodes für die Ansteuerung eines elektronischen Geräts (2), wobei das System (5) eine Steuervorrichtung (3), eine Datenbank (4) mit Programmcodes (10) und eine Suchvorrichtung (6), umfasst,
und das System (5) dazu eingerichtet ist, das Verfahren nach einem der vorhergehenden Ansprüche durchzuführen, wobei der optimale Programmcode (1) aus den Programmcodes (10) der Datenbank (4) von der Suchvorrichtung (6) ermittelt und an die Steuervorrichtung (3) übertragen wird, wodurch das elektronische Gerät (2) durch die Steuervorrichtung (3) ansteuerbar ist.

9. Computerprogramm, welches direkt in einen Speicher der Suchvorrichtung (6) des Systems (5) nach Anspruch 8 ladbar ist, mit Programmcodemitteln, um die Schritte des Verfahrens nach einem der Ansprüche 1 bis 7 auszuführen, wenn das Computerprogramm in der Suchvorrichtung (6) ausgeführt wird.

10. Speichermedium mit darauf gespeicherten elektronisch lesbaren Steuerinformationen, welche zumindest ein Computerprogramm nach Anspruch 9 umfassen und derart ausgestaltet sind, dass sie bei Verwendung des Speichermediums in der Suchvorrichtung (6) des Systems (5) nach Anspruch 8 ein Verfahren nach einem der Ansprüche 1 bis 7 durchführen.

## FIG 1

# FIG 2

```
test <- subset(cran_rforest, numDownloads>0)
test$value <- ifelse(test$avgDls < 0.5, "VLOW", ifelse(test$avgDls < 5,
"LOW",
ifelse (test$avgDls < 20, "MID", ifelse (test$avgDls < 200, "HIGH",
"VHIGH"))))

test$value <- as.factor(test$value)
test$avgDls <- NULL
test$numDownloads <- NULL
require(randomForest)
test.imputed <- rfImpute(value ~ ., test)
samp <- sample(nrow(test.imputed), 0.6* nrow(test.imputed))
training <- test.imputed[samp, ]
testing <- test.imputed[-samp, ]
```

# FIG 3

```
// invoke the random forest package to train an ML model.
randomForest(formula = value - ., data = training, importance TRUE)
// these are the training parameters.
Type of random forest: classification
Number of trees: 500
No. of variables tried at each split: 4
// OOB is the overall model quality.
OOB estimate of error rate: 10.88%
```

# FIG 4

# FIG 5

FIG 6

FIG 7

FIG 8

FIG 9

FIG 10

EP 3 637 354 A1

# FIG 11

```
// assign the app attributes dataset
d <- appAttributesDataset
// use kmeans for clustering
appClusters <- kmeans(d[, 1:2], 5, nstart = 20)
// prepare for plotting
appClusters$cluster <- as.factor(appClusters$cluster)
// plot clusters
ggplot(d, aes(revDepends, numVers, color=appClusters$cluster, label =
rownames(d))) + geom_text()
```

# FIG 12

FIG 13

**Europäisches Patentamt**
**European Patent Office**
**Office européen des brevets**

# EUROPÄISCHER RECHERCHENBERICHT

Nummer der Anmeldung

EP 18 19 9859

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2015/103337 A1 (QUIXEY INC [US]) 9. Juli 2015 (2015-07-09) * das ganze Dokument * ----- | 1-10 | INV. G06Q30/06 G06F8/61 G05B19/042 G06F16/2457 |
| X | EP 3 267 389 A1 (YANDEX EUROPE AG [CH]) 10. Januar 2018 (2018-01-10) * Zusammenfassung * * Absatz [0016] - Absatz [0033] * * Absatz [0045] - Absatz [0048] * * Absatz [0056] * * Absatz [0078] * * Absatz [0083] - Absatz [0086] * * Absatz [0099] - Absatz [0114] * * Absatz [0126] - Absatz [0151] * ----- | 1-10 | |
| X | US 2017/329785 A1 (HE RUIMING [CN] ET AL) 16. November 2017 (2017-11-16) * Zusammenfassung * * Absatz [0036] - Absatz [0159] * ----- | 1-10 | |
| X | US 2016/335263 A1 (YIN DAWEI [US] ET AL) 17. November 2016 (2016-11-17) * Zusammenfassung * * Absatz [0042] - Absatz [0093] * ----- | 1-10 | **RECHERCHIERTE SACHGEBIETE (IPC)** G06F G06Q G05B |

Der vorliegende Recherchenbericht wurde für alle Patentansprüche erstellt

| Recherchenort | Abschlußdatum der Recherche | Prüfer |
|---|---|---|
| Den Haag | 20. März 2019 | Kielhöfer, Patrick |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

    ........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 19 9859

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-03-2019

| Im Recherchenbericht angeführtes Patentdokument | Datum der Veröffentlichung | Mitglied(er) der Patentfamilie | Datum der Veröffentlichung |
|---|---|---|---|
| WO 2015103337 A1 | 09-07-2015 | CN 106233282 A | 14-12-2016 |
| | | EP 3090368 A1 | 09-11-2016 |
| | | US 2015186533 A1 | 02-07-2015 |
| | | WO 2015103337 A1 | 09-07-2015 |
| EP 3267389 A1 | 10-01-2018 | KEINE | |
| US 2017329785 A1 | 16-11-2017 | CN 104991914 A | 21-10-2015 |
| | | JP 6442081 B2 | 19-12-2018 |
| | | JP 2018519563 A | 19-07-2018 |
| | | KR 20170129856 A | 27-11-2017 |
| | | US 2017329785 A1 | 16-11-2017 |
| | | WO 2016206503 A1 | 29-12-2016 |
| US 2016335263 A1 | 17-11-2016 | KEINE | |

EPO FORM P0461

Für nähere Einzelheiten zu diesem Anhang : siehe Amtsblatt des Europäischen Patentamts, Nr.12/82